Europäisches Patentamt

European Patent Office

Office européen des brevets

(11) Numéro de publication: **0 166 143**
**B1**

(12) **FASCICULE DE BREVET EUROPEEN**

(45) Date de publication du fascicule du brevet: **24.10.90**

(21) Numéro de dépôt: **85105738.0**

(22) Date de dépôt: **10.05.85**

(51) Int. Cl.⁵: **B 23 H 7/06**

(54) **Procédé pour le découpage par électroérosion et dispositif pour sa mise en oeuvre.**

(30) Priorité: **26.06.84 CH 3080/84**

(43) Date de publication de la demande:
**02.01.86 Bulletin 86/01**

(45) Mention de la délivrance du brevet:
**24.10.90 Bulletin 90/43**

(84) Etats contractants désignés:
**DE FR GB**

(56) Documents cités:
**DE-A-2 818 058**
**US-A-4 329 558**

(73) Titulaire: **CHARMILLES TECHNOLOGIES S.A.**
**rue du Pré-de-la-Fontaine 8-10**
**CH-1242 Satigny (CH)**

(72) Inventeur: **Balleys, François**
**10 chemin du Bac**
**CH-1213 Petit-Lancy (CH)**

(74) Mandataire: **Blum, Rudolf Emil Ernst et al**
**c/o E. Blum & Co Patentanwälte Vorderberg 11**
**CH-8044 Zürich (CH)**

Courier Press, Leamington Spa, England.

## Description

Lors de la découpe par électroérosion d'une pièce-électrode au moyen d'un fil-électrode, il est parfois nécessaire d'incliner ce dernier par rapport à la normale au plan de découpe. Si au cours d'une découpe cette inclinaison doit varier ou changer d'orientation par rapport à la pièce à usiner, les différentes parties du fil devront parcourir à l'intérieur de la pièce à usiner des trajectoires d'usinage de longueurs différentes entre le début et la fin de la découpe.

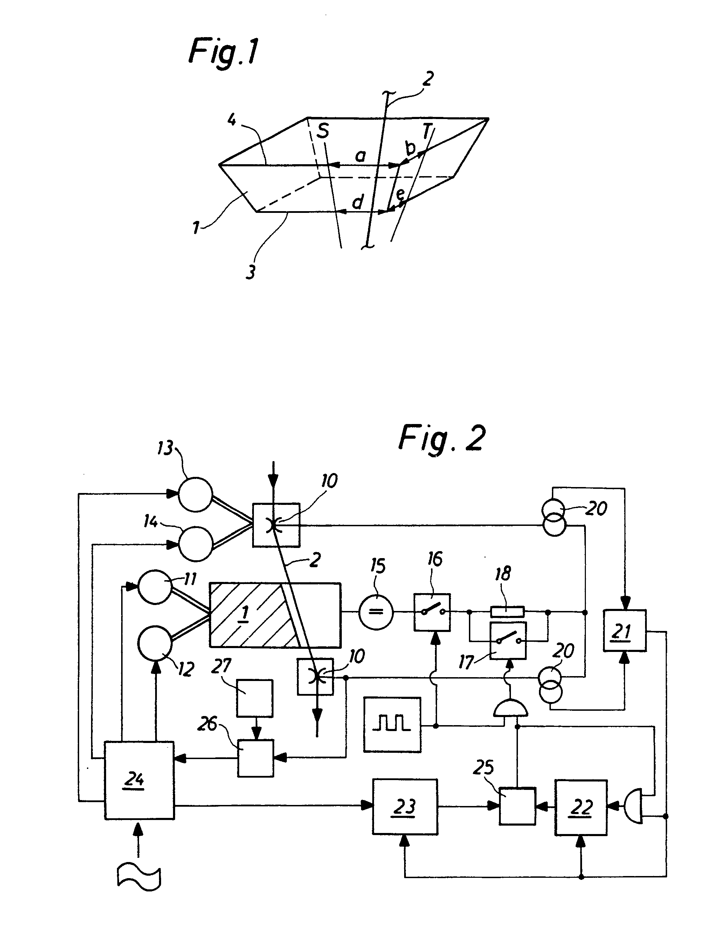

Il est en effet évident que lors de la taille de la surface latérale d'une pièce en tronc de cône l'extrémité de la ligne de coupe située à proximité de la petite base parcourra un chemin de découpe plus court que l'autre extrémité de cette ligne. De même, comme le montre la figure 1, lorsqu'une extrémité de la ligne de découpe atteint un angle en retrait d'une pièce à tailler en biseau, l'avance d'usinage du fil à cet endroit devra être pratiquement interrompue jusqu'à ce que l'autre extrémité de la ligne de découpe ait atteint l'angle en surplomb correspondant ou ait même progressé au-delà, jusqu'à une position où l'inclinaison de la ligne de découpe par rapport au plan de découpe est redevenue minimale. Pour simplifier la description qui suit de manière à éviter la mention de distances "mesurées le long de la partie du fil momentanément située entre les guides qui le supportent", les positions géométriques seront maintenant décrites comme si le fil restait longitudinalement immobile, alors qu'il est bien connu que pour suppléer à l'érosion qu'il subit lors de l'usinage, ce fil doit toujours être renouvelé, et pour cela défiler longitudinalement entre les guides qui le supportent.

Comme la largeur de la coupe varie en sens inverse de la vitesse d'avance si différentes parties du fil progressent à des vitesses différentes il y aura un excès de matière enlevée là où la vitesse d'avance du fil est faible, et trop peu de matière enlevée là où cette vitesse est grande. Un cas limite est illustré par la découpe d'un cône, dont la région proche du sommet subira une érosion excessive conduisant à une forme arrondie à cause de la quasi-immobilité du fil à cet endroit pendant toute la durée de l'usinage de la surface latérale du cône.

Pour réduire dans une certaine mesure ce genre de défaut en évitant un surplace local du fil à l'endroit des arêtes latérales de pièces à tailler en biseau, le brevet DE-2,818,058 prévoit une modification progressive de l'inclinaison du fil par rapport au plan de découpe, de manière à ce que toutes les parties travaillantes du fil atteignent une arête simultanément, c'est-à-dire que le fil soit orienté en direction de cette arête au moment de l'atteindre, même s'il avait une orientation différente au début de la découpe. On évite ainsi un arrêt complet du fil à l'extrémité en retrait de cette arête. Mais cette méthode ne fait que répartir sur une certaine longueur de la trajectoire de découpe une erreur d'usinage auparavant concentrée au voisinage d'une arête. En effet, sur toute la partie de la trajectoire où l'inclinaison du fil varie, les vitesses d'avance seront différentes pour différents points du fil, et la quantité de matière enlevée par conséquent aussi, d'où des erreurs d'usinage.

L'invention vise à éliminer entièrement les défauts d'usinage dus aux différences entre les vitesses d'avance en divers points du fil lorsque celui-ci change d'orientation par rapport à la pièce à usiner.

A cet effet, l'invention est définie comme il est dit aux revendications 1 et 3.

L'invention sera maintenant illustrée par la description d'un mode d'exécution et à l'aide du dessin, dans lequel:

la figure 1 montre les différentes distances que doivent parcourir les différentes parties d'un fil usinant une pièce taillée en biseau, et

la figure 2 montre le schéma fonctionnel d'une machine à usinage par érosion pour la mise en oeuvre de l'invention.

Dans la figure 1 pièce 1 en forme de pyramide tronquée est découpée par un fil 2. On voit que la partie du fil qui découpe la pièce au voisinage du périmètre inférieur 3 de la pyramide parcourra au cours de l'usinage un chemin plus court que la partie du fil située au voisinage du périmètre supérieur 4 de cette pyramide. Entre les positions S et T du fil celui-ci devra usiner la pièce sur une longueur (a + b) à sa partie supérieure et sur une longueur moins grande (d + e) à sa partie inférieure. Si l'orientation du fil ne change pas de façon continue pendant tout l'usinage, mais reste stable sur une partie de la trajectoire d'usinage, les différences de vitesse entre la partie haute et la partie basse du fil seront encore plus marquées sur le reste de la trajectoire.

Dans le schéma de la figure 2, qui illustre les circuits de commande d'une machine selon l'invention, les chiffres de référence 1 et 2 désignent à nouveau la pièce à usiner respectivement le fil servant à cet usinage. Ce fil 2 est tendu entre deux guides 10 sur lesquels il défile longitudinalement pour que sa partie servant à l'érosion soit constamment renouvelée. Deux moteurs 11 et 12 commandent les déplacements de la pièce à usiner parallèlement au plan de découpe, et deux autres moteurs 13 et 14 commandent les déplacements d'un guide 10 par rapport à l'autre, et par conséquent l'orientation du fil par rapport à la pièce.

Un circuit générateur d'impulsion comporte une source de tension 15 en série avec un interrupteur 16 et une résistance 18. Cette dernière peut être shuntée par un second interrupteur 17 de manière à produire des décharges à faible énergie lorsque l'interrupteur 17 est ouvert et des décharges à grande énergie lorsqu'il est fermé.

La position de chaque décharge le long du fil est déterminée par un circuit de détection de type connu esquissé par les éléments 20 et 21, tel par exemple celui décrit dans le brevet US-4,329,558. Pour rendre cette mesure de position indépendante du niveau de courant, on peut calculer soit le rapport entre les courants circulant dans les deux contacts d'amenée de courant au fil, soit l'écart relatif entre ces deux courants, soit encore le quotient de la différence entre ces deux courants par leur somme.

Une mémoire 22 reçoit l'information ainsi obtenue, qui indique en quel endroit du fil s'est produit la décharge. Pour fixer les idées, on supposera ici que la partie du fil située entre les guides 10 est divisée en un certain nombre de secteurs et que le circuit 21 délivre à la mémoire 22 une information digitale indiquant dans quel secteur s'est produit la dernière décharge. En outre, un circuit non représenté sur la figure délivrera le cas échéant à la mémoire 22 un signal de comptage indiquant qu'une décharge d'amorçage a été transformée en décharge de puissance. Le nombre total de décharges de puissance effectuées par unité de temps dans chacun des secteurs du fil est mémorisé et constamment remis à jour dans la mémoire 22 qui peut par exemple comporter à cet effet un registre de transfert séparé pour chaque secteur du fil. Chaque registre peut alors mémoriser le nombre de décharges de puissance qui ont eu lieu par unité de temps dans le secteur correspondant.

Pour chacun de ces secteurs, un circuit de calcul 23 élabore et remet à jour le nombre de décharges de puissance de référence qui seraient nécessaires pour obtenir une répartition donnée des vitesses d'avance. Cette répartition dépend essentiellement de la vitesse de chaque guide par rapport à la pièce à usiner, de la distance entre les guides et de la position de chaque secteur le long du fil. Pour tenir compte de ces facteurs, le circuit de calcul 23 reçoit des signaux porteurs d'information tant du circuit de mesure 21 que d'un circuit de commande numérique 24 commandant les moteurs 11, 12, 13 et 14. Ce circuit de commande reçoit lui-même des signaux émis par un régulateur de gap 26 qui a pour fonction de régler la vitesse d'avance du fil en fonction de l'écart entre la tension effective d'usinage et une tension de référence $\overline{U}_R$ délivrée par une source de tension 27.

Un discriminateur 25 compare le nombre de décharges de puissance déjà produites depuis un instant $t_o$ dans le secteur où a lieu une décharge d'amorçage avec une valeur consigne du nombre de décharges de puissance désirable dans le secteur en question, cette valeur de consigne étant délivrée par le circuit de calcul 23. Lorsque le nombre de décharges déjà produites est inférieur à une valeur-limite qui peut être égale à la valeur de consigne ou en différer d'une quantité déterminée pour tenir compte des fluctuations statistiques, le discriminateur 25 ferme l'interrupteur 17 pour produire une décharge de puissance à l'endroit de la décharge d'amorçage. En outre, le discriminateur provoque dans la mémoire 22 l'addition de la nouvelle décharge au nombre de décharges de puissance déjà effectuées dans le secteur en question. Si au contraire, ce dernier nombre excède une valeur-limite calculée pour ce secteur, le discriminateur 25 laisse ouvert l'interrupteur 17 et déclenche l'amorçage d'une nouvelle décharge d'amorçage, sans enregistrer la précédente dans la mémoire 22. Selon les cas, les registres de cette mémoire peuvent être agencés soit pour accumuler le nombre total de décharges de puissance dans chaque secteur au cours de tout l'usinage, soit pour être périodiquement purgés, soit pour indiquer constamment le nombre de décharges de puissance ayant eu lieu dans chaque secteur au cours de la dernière unité de temps écoulée, c'est-à-dire le nombre momentané de décharges de puissance par unité de temps. Dans le cas d'une purge périodique des registres correspondant aux différents secteurs du fil, on peut soit remettre ces registres à zéro, soit laisser dans chaque registre un nombre représentant l'excédent de décharges par rapport à la valeur-consigne qui ont eu lieu dans le secteur qu'il représente, afin d'éviter que les erreurs ne s'accumulent. De même, les valeurs de consigne déterminées par le circuit de calcul 23 peuvent correspondre à des valeurs cumulatives depuis le début de l'étincelage, mais correspondront de préférence à des valeurs momentanées de la fréquence de consigne des décharges de puissance dans chaque secteur, déterminée à partir des mouvements relatifs momentanés du secteur en question et de la pièce à usiner.

Dans une variante préférée, le circuit de calcul 23 ne détermine pas un certain nombre de valeurs absolues dont chacune représente par exemple le nombre de décharges de puissance à obtenir par unité de temps dans un secteur donné, mais uniquement les rapports qui doivent être maintenus entre les nombres de décharges ayant lieu dans les divers secteurs, à l'endroit où s'effectue momentanément l'usinage, soit par unité de temps soit de façon cumulative depuis le début de celui-ci. Les valeurs-limites ne seront alors déterminées qu'à un facteur près qui peut par exemple être calculé à partir du nombre total de décharges de puissance ayant eu lieu dans tous les secteurs, soit pendant la dernière unité de temps écoulée, soit depuis le début de l'usinage.

Le maintien en chaque endroit du fil d'un nombre de décharges de puissance fonction soit de la vitesse d'avance du fil à cet endroit soit du chemin qu'il doit parcourir permet d'obtenir un gap constant sur toute la longueur utile du fil et d'éviter toute erreur d'usinage due à un gap variable.

**Revendications**

1. Procédé pour découper par décharges érosives une pièce-électrode (1) au moyen d'un fil-électrode (2) tendu entre deux guides (10) et défilant entre ceux-ci au cours duquel les divers secteurs du segment du fil (2) traversant la zone d'usinage comprise entre les électrodes suivent leur trajectoire d'usinage à des vitesses différentes par suite de changements d'inclinaison de ce segment, caractérisé en ce qu'on module l'énergie d'usinage en fonction de la vitesse du secteur de ce segment où se produit la décharge.

2. Procédé selon la revendication 1, caractérisé en ce qu'on effectue de façon répétée un cycle d'usinage consistant

- à amorcer une décharge-test à faible niveau d'énergie,

à détecter dans lequel parmi plusieurs secteurs prédéterminés du segment de fil dans la zone d'usinage se produit cette décharge,

à comparer le nombre, préalablement mémorisé, de décharges d'usinage effectuées dans ce secteur avec un nombre de référence calculé en fonction de la vitesse de ce secteur et de celle d'au moins un autre secteur,

à interrompre la décharge-test ou à la transformer en une décharge d'usinage ayant un niveau d'énergie supérieur à celui de la décharge-test selon que le nombre de décharges mémorisé est supérieur ou inférieur au nombre de référence calculé ou à une valeur limite différant dudit nombre de référence d'une quantité déterminée.

3. Dispositif pour la mise en oeuvre du procédé selon la revendication 1, comportant une installation de commande (24) des déplacements relatifs de la pièce (1) et des guides (10) du segment de fil (2), un circuit de réglage de la vitesse de ces déplacements pour maintenir une distance d'étincelage moyenne déterminée entre la pièce (1) et le fil (2) et un circuit (20, 21) pour détecter le secteur du fil (2) où se produit une décharge, caractérisé par

un circuit à mémoires (22) commandé par le circuit de détection pour mémoriser séparément le nombre de décharges d'usinage produites dans les différents secteurs du fil (2),

un circuit de calcul (23) associé à l'installation de commande (24) pour déterminer pour chaque secteur du fil (2) le nombre de décharges d'usinage à produire en fonction de l'écart entre la vitesse de ce secteur et de celle d'au moins un autre secteur,

des moyens pour amorcer une décharge-test à faible niveau d'énergie,

un circuit (25) pour comparer le nombre de décharges d'usinage produites dans le secteur où a lieu la décharge-test avec le nombre de décharges d'usinage à produire dans ce secteur,

un circuit logique (17, 18) pour transformer la décharge-test en décharge de puissance ou amorcer une nouvelle décharge-test selon que le nombre de décharges produites est inférieur ou supérieur au nombre de décharges à produire ou à une valeur limite différant de ce dernier d'une quantité déterminée.

**Patentansprüche**

1. Verfahren zum elektroerosiven Schneiden einer Werkstückelektrode (1) mittels einer Drahtelektrode (2), welche zwischen zwei Drahtführungen (10) gespannt ist und zwischen diesen durchläuft, bei welchem Durchlauf die verschiedenen Sektoren des die Bearbeitungszone zwischen den Elektroden durchquerenden Drahtsegmentes (2) ihrer Bearbeitungsbahn aufgrund der Neigungsänderung des Segmentes mit verschiedenen Geschwindigkeiten folgen, dadurch gekennzeichnet, dass die Bearbeitungsenergie in Funktion der Geschwindigkeit des Sektors des Segmentes moduliert wird, in dem die Entladung erfolgt.

2. Verfahren nach Anspruch 1, dadurch gekennzeichnet, dass wiederholterweise ein Bearbeitungszyklus ausgeführt wird, umfassend

die Einleitung einer Prüfentladung mit schwachem Energieniveau,

die Erfassung, in welchem unter mehreren vorausbestimmten Sektoren des Drahtsegmentes in der Bearbeitungszone sich die Entladung ereignet,

den Vergleich der, zuvor gespeicherten, Anzahl der im Sektor vorgenommenen Bearbeitungsentladungen mit einer Referenzanzahl, berechnet in Funktion der Geschwindigkeit des Sektors und derjenigen mindestens eines anderen Sektors,

das Unterbrechen der Prüfentladung oder deren Umwandlung in eine Bearbeitungsentladung mit einem höheren Energieniveau als dasjenige der Prüfentladung je nachdem, ob die gespeicherte Anzahl Entladungen grösser oder kleiner als eine berechnete Referenzanzahl oder ein Grenzwert ist, der sich von der genannten Referenzanzahl um einen vorbestimmten Wert unterscheidet.

3. Vorrichtung zur Ausführung des Verfahrens nach Anspruch 1, umfassend eine Steuereinrichtung (24) für die Relativbewegungen des Werkstückes (1) und der Führungen (10) für das Drahtsegment (2), eine Schaltung zur Regelung der Geschwindigkeit dieser Relativbewegungen zur Einhaltung einer vorbestimmten mittleren Funkenstrecke zwischen dem Werkstück (1) und dem Draht (2) und eine Schaltung (20, 21) zur Erkennung des Sektors des Drahtes (2), in dem eine Entladung erfolgt, gekennzeichnet durch

eine von der Schaltung zur Erkennung gesteuerte Speicherschaltung (22) zur getrennten Speicherung der Anzahl der in den verschiedenen Sektoren des Drahtes (2) erzeugten Bearbeitungsentladungen,

eine mit der Steuereinrichtung (24) verbundene Rechenschaltung (23), um für jeden Sektor des Drahtes (2) die Anzahl der zu erzeugenden Bearbeitungsentladungen in Funktion des Unterschiedes zwischen der Geschwindigkeit dieses Sektors und derjenigen mindestens eines anderen Sektors zu bestimmen,

Mittel zur Einleitung einer prüfentladung mit schwachem Energieniveau,

eine Schaltung (25) zum Vergleich der Anzahl der im Sektor der Prüfentladung erzeugten Bearbeitungsentladungen mit der Anzahl der in diesem Sektor zu erzeugenden Bearbeitungsentladungen, und

eine Logikschaltung (17, 18) zur Umwandlung der Prüfentladung in eine Leistungsentladung oder zur Einleitung einer erneuten Prüfentladung, je nachdem, ob die Anzahl der erzeugten Entladungen kleiner oder grösser als die Anzahl der zu erzeugenden Entladungen oder als ein von dieser um einen vorbestimmten Wert abweichender Grenzwert ist.

## Claims

1. Method for cutting by erosive discharges an electrode workpiece (1) by means of an electrode-wire (2) stretched between two guides (10) and unwinding between the latter, in the course of which the various sectors of the segment of the wire (2) traversing the machining zone between the electrodes follow their machining jectory at different speeds resulting from changes in the inclination of this segment, characterized in that the machining energy is modulated as a function of the speed of the sector of this segment where the discharge is produced.

2. Method according to Claim 1, characterized in that a machining cycle is repeatedly performed which consists

in triggering a test discharge with a low level of energy,

in detecting in which of several predetermined sectors of the wire segment in the machining zone this discharge is produced,

in comparing the number, memorized beforehand, of machining discharges performed in this sector with a reference number calculated as a function of the speed of this sector and that of at least one other sector,

in interrupting the test discharge or in converting it into a machining discharge having a level of energy greater than that of the test discharge depending on whether the memorized number of discharges is greater or less than the calculated reference number or than a limit value differing from the said reference number by a determined quantity.

3. Device for implementing the method according to Claim 1, comprising a unit (24) for controlling the relative displacements of the workpiece (1) and of the guides (10) of the wire segment (2), a circuit for adjusting the speed of these displacements in order to maintain a determined average electroerosion distance between the workpiece (1) and the wire (2) and a circuit (20, 21) for detecting the sector of the wire (2) where a discharge is produced, characterized by

a memory circuit (22) controlled by the detection circuit in order to memorize separately the number of machining discharges produced in the various sectors of the wire (2),

a calculation circuit (23) combined with the control unit (24) for determining, for each sector of the wire (2), the number of machining discharges to be produced as a function of the gap between the speed of this sector and that of at least one other sector,

means for triggering a test discharge with a low level of energy,

a circuit (25) for comparing the number of machining discharges produced in the sector where the test discharge takes place with the number of machining discharges to be produced in this sector,

a logic circuit (17, 18) for converting the test discharge into a power discharge or triggering a new test discharge depending on whether the number of discharges produced is less than or greater than the number of discharges to be produced or than a limit value differing from the latter by a determined quantity.

## Fig.1

## Fig. 2